# EUROPEAN PATENT SPECIFICATION

(11) **EP 3 081 803 B1**
(45) Date of publication and mention of the grant of the patent: **20.06.2018**
(21) Application number: 16164662.5
(22) Date of filing: 11.04.2016
(51) Int. Cl.: F16K 31/528, F16K 1/20, F02M 26/48, F02D 41/00, F16K 1/24, F02M 26/00, F02M 26/53, F02M 26/67, F16K 31/04

(54) **EXHAUST GAS RECIRCULATION (EGR) VALVE OF WHICH OPENING EXTENT IS PRECISELY CONTROLLABLE IN EARLY OPEN PERIOD THEREOF**
ABGASRÜCKFÜHRUNGS (AGR)-VENTIL MIT PRÄZISE STEUERBAREM ÖFFNUNGSUMFANG IN DER FRÜHEN ÖFFNUNGSPHASE
SOUPAPE DE RECIRCULATION DES GAZ D'ÉCHAPPEMENT DONT LA LARGEUR D'OUVERTURE PEUT ÊTRE RÉGULÉE AVEC PRÉCISION PENDANT LA PÉRIODE DURÉE D'OUVERTURE PRÉCOCE

(30) Priority: 13.04.2015 KR 20150051530
(43) Date of publication of application: 19.10.2016
(73) Proprietor: Kamtec, Inc., Chungcheongbuk-do 27818 (KR)
(72) Inventor: KOO, Jung Suek, 18449 Hwaseong-si (KR); PARK, Chan Woo, 18449 Hwaseong-si (KR); SHIM, Jae Ha, 18449 Hwaseong-si (KR); RYU, Dong Han, 18449 Hwaseong-si (KR)
(74) Representative: Zardi, Marco

(56) References cited:
- WO-A1-2014/024609
- DE-A1- 19 829 808
- FR-A1- 2 914 975
- JP-A- H11 194 825
- US-A1- 2009 164 098
- US-A1- 2011 023 846

## Description

### BACKGROUND OF THE INVENTION

### Field of the Invention

The present invention relates to an exhaust gas recirculation (EGR) valve for vehicles and, more particularly, to an EGR valve configured such that the amount of exhaust gas introduced through recirculation is precisely controlled in an early open period of the EGR valve.

### Description of the Related Art

At present, the most frequently used method for limiting the production of nitrogen oxides (NOx) from exhaust gas discharged from an engine mounted in a vehicle
is the use of an exhaust gas recirculation (EGR) valve, which adds some cooled exhaust gas to a mixer, causing the same to be suctioned into a cylinder.

Such an EGR valve is disclosed in Korean Registered Patent No. 10-1225681, and WO 2014/024609.

The EGR valve includes a housing having an introduction port and a discharge port formed therein, a valve member for selectively opening and closing the introduction port, and an actuator for reciprocating the valve member.

A power transmission device is provided between the valve member and the actuator to transit power from the actuator to the valve member. The power transmission device includes a gear module, which includes a plurality of gears, and a cam. The valve member is connected to the cam.

A long curved hole, i.e. a cam groove, is formed in the cam. A roller is provided in the cam. The roller is connected to a valve stem of the valve member.

A valve plate is provided at the lower end of the valve stem to open and close the introduction port.

The introduction port of the EGR valve is connected to an exhaust manifold of an engine, and the discharge port of the EGR valve is connected to an intake manifold of the engine. In response to the operation of the actuator and the valve member, some of the exhaust gas discharged from the exhaust manifold of the engine is selectively moved to the intake manifold of the engine by the EGR valve.

In the conventional EGR valve, whether the valve member is in an open or closed state is checked using a magnet provided in the power transmission device, specifically in a rotary shaft of the gear module, and a sensor for sensing a magnetic field generated by the magnet.

As the actuator is operated, the gear module and the cam are rotated. In response to the rotation of the cam, the valve member moves upward and downward.

Meanwhile, the magnet revolves in response to the rotation of the gear module. As the magnet revolves, the magnetic field generated by the magnet, which is sensed by the sensor, varies. Consequently, it is possible to recognize the extent by which the valve member has been moved based on the value indicating variation in the magnetic field.

The sensor, which senses the magnetic field generated by the magnet, outputs a predetermined output voltage based on the sensed value of the magnetic field. A controller of the EGR valve may recognize that the valve member is currently in an open state based on the output voltage, and may transmit this information to an electronic control unit (ECU).

The sensor outputs a voltage of 1 to 4 V. The output voltage corresponds to the distance by which the valve stem is moved, for example 0 to 6 mm.

The relationship between the output value from the sensor and the movement distance may be realized as a linear graph having a constant slope.

In this state, the period (1 to 4 V) of the output value from the sensor may be divided into, for example, 16 periods, and the period (0 to 6 mm) of the movement distance may be divided into 16 periods.

The 16 periods may be equal.

Theoretically, the amount of exhaust gas that is introduced must change linearly as the movement distance of the valve stem changes linearly.

However, the amount of exhaust gas that is introduced is abruptly increased in an early open period of the EGR valve, with the result that it is difficult to precisely control the exhaust gas.

This is because the movement distance periods are equal.

Therefore, there is a high necessity for more precisely controlling the operation of the valve stem during an early introduction period of exhaust gas in order to precisely control the amount of exhaust gas that is introduced.

### SUMMARY OF THE INVENTION

Therefore, the present invention has been made in view of the problems of the related art, and it is one object of the present invention to provide an exhaust gas recirculation (EGR) valve configured such that the operation of a valve member and the output of voltage from a sensor based thereon in an early open period of the EGR valve, i.e. in a period in which the movement distance or opening angle of the valve member is small, are more minutely realized than in other periods, whereby it is possible to minutely control the amount of exhaust gas that is introduced in the early open period of the EGR valve.

In accordance with one aspect of the present invention, the above and other objects can be accomplished by the provision of an EGR valve for vehicles including a valve member for opening and closing an EGR channel, a sensor unit for sensing the opening extent of the valve member and outputting an output voltage value corresponding to the opening extent of the valve member, and a controller connected to the sensor unit for recognizing the opening extent of the valve member based on the value output from the sensor unit to control the valve member, wherein a change in the opening extent of the valve member and a change in the output value from the sensor unit are linear, and a linear graph defining the relationship between the opening extent of the valve member and the output value from the sensor unit in a first period, which is an early open period after the valve member opens the EGR channel, and a linear graph defining the relationship between the opening extent of the valve member and the output value from the sensor unit in a second period, in which the valve member is maximally open after the first period, are realized so as to have different slopes.

In accordance with another aspect of the present invention, there is provided an EGR valve for vehicles including a valve member including a valve plate for opening and closing an EGR channel, a valve stem connected to the valve plate, the valve stem being configured to move upward and downward, a sensor unit for measuring a distance by which the valve stem moves, and a controller connected to the sensor unit for recognizing a movement distance of the valve member based on an output value from the sensor unit to control the valve member, wherein a change in the movement distance of the valve stem and a change in the value output from the sensor unit are linear, and a linear graph defining the relationship between the movement distance of the valve stem and the output value from the sensor unit in a first period, which is an early open period after the valve plate opens the EGR channel, and a linear graph defining the relationship between the movement distance of the valve stem and the output value from the sensor unit in a second period, in which the valve member is maximally open after the first period, are realized so as to have different slopes.

In accordance with a further aspect of the present invention, there is provided an EGR valve for vehicles including a valve member including a valve plate for opening and closing an EGR channel and a rotary shaft, a sensor unit for measuring an opening angle of the valve member, and a controller connected to the sensor unit for recognizing the opening angle of the valve member based on an output value from the sensor unit to control the valve member, wherein a change in the opening angle of the valve member and a change in the value output from the sensor unit are linear, and a linear graph defining the relationship between the opening angle of the valve member and the output value from the sensor unit in a first period, which is an early open period after the valve member opens the EGR channel, and a linear graph defining the relationship between the opening angle of the valve member and the output value from the sensor unit in a second period, in which the valve member is maximally open after the first period, are realized so as to have different slopes.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view of a high-pressure exhaust gas recirculation (EGR) valve according to the present invention;
FIG. 2 is an exploded perspective view of the high-pressure EGR valve according to the present invention;
FIG. 3 is a schematic view showing a process in which a valve unit of the high-pressure EGR valve according to the present invention is opened and closed;
FIG. 4 is a schematic view showing an early open state of the valve unit of the high-pressure EGR valve according to the present invention and a subsequent open state of the valve unit;
FIG. 5 is a side sectional view showing the state in which a valve unit of a low-pressure EGR valve according to the present invention is open and the state in which the valve unit of the low-pressure EGR valve according to the present invention is closed;
FIG. 6 is a control block diagram of the high-pressure or low-pressure EGR valve according to the present invention;
FIG. 7A is a graph showing the relationship between the distance by which the valve unit is moved and the voltage output from a sensor in the high-pressure EGR valve according to the present invention and the relationship between the distance by which a valve unit is moved and the voltage output from a sensor in a conventional high-pressure EGR valve;
FIG. 7B is a graph showing the relationship between the distance by which the valve unit is moved and the voltage output from a sensor in the low-pressure EGR valve according to the present invention and the relationship between the distance by which a valve unit is moved and the voltage output from a sensor in a conventional low-pressure EGR valve; and
FIG. 8 is a graph showing the relationship between the flow rate of exhaust gas that is introduced and the voltage output from the sensor in the present invention and the relationship between the flow rate of exhaust gas that is introduced and the voltage output from the sensor in the conventional art.

### DETAILED DESCRIPTION OF THE INVENTION

Reference will now be made in detail to embodiments, examples of which are illustrated in the accompanying drawings. However, the present invention may be embodied in many different forms and should not be construed as limited to the embodiments set forth herein. Rather, these embodiments are provided so that the present invention will be thorough and complete, and will fully convey the scope of the disclosure to those skilled in the art. The present invention is defined only by the categories of the claims.

In addition, the terms used in this specification are provided only to explain specific embodiments, but are not intended to restrict the present invention. A singular representation may include a plural representation unless it represents a definitely different meaning from the context. The terms "comprises" and "comprising" described herein should be interpreted not to exclude other elements but to further include such other elements since the corresponding elements may be inherent unless mentioned otherwise. Unless otherwise defined, all terms, including technical and scientific terms, used in this specification have the same meaning as commonly understood by a person having ordinary skill in the art to which the present invention pertains.

Hereinafter, embodiments of the present invention will be described in detail with reference to the accompanying drawings.

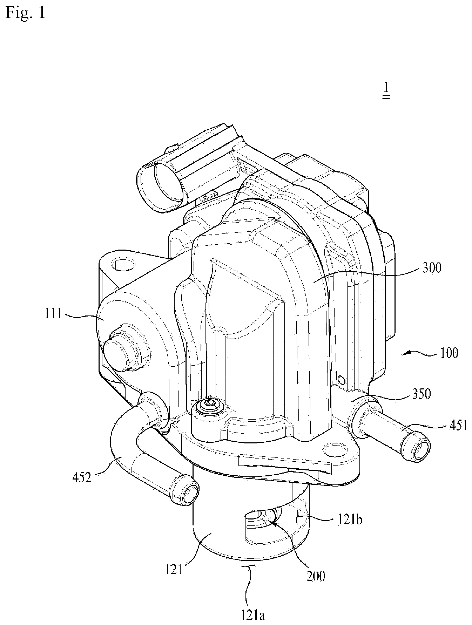

FIG. 1 is a perspective view of a high-pressure exhaust gas recirculation (EGR) valve according to the present invention.

As shown in FIG. 1, a high-pressure EGR valve 1 according to the present invention includes a housing 100.

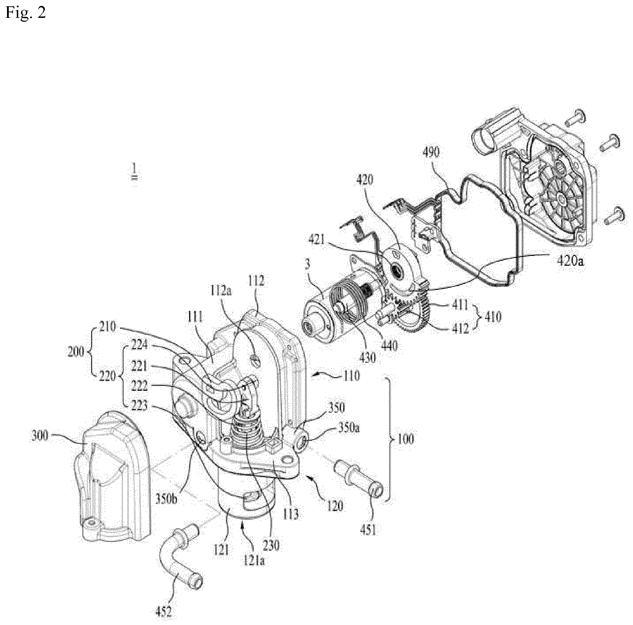

The housing 100 is provided at one side of the upper part thereof with a motor installation part 111, in which a driving motor 3 (see FIG. 2) is installed. The housing 100 is provided at the lower part thereof with an EGR channel 121, in which exhaust gas may flow.

The housing 100 is provided with a valve unit 200. The valve unit 200 is covered by a valve cover 300, which is installed at the housing 100, such that the valve unit 200 is prevented from being exposed outward.

The valve unit 200 is installed in the EGR channel 121 such that the valve unit 200 moves upward and downward relative to the EGR channel 121 so as to open and close the EGR channel 121.

The housing 100 is provided at the lower part thereof with an exhaust gas introduction port 121a for the EGR channel 121. The housing 100 is provided at one side of the lower part thereof with a discharge port 121b for the EGR channel 121, which is located at one side of the EGR channel 121.

As the valve unit 200 moves upward and downward, the exhaust gas introduction port 121a and the discharge port 121b of the EGR channel 121 communicate with each other or do not communicate with each other.

As will be described hereinafter, the valve unit 200 may be operated by driving force generated from the driving motor 3 (see FIG. 2), which is installed in the motor installation part 111.

FIG. 2 is an exploded perspective view of the high-pressure EGR valve 1 according to the present invention.

Specifically, FIG. 2 is an exploded perspective view of the high-pressure EGR valve 1 according to the present invention when viewed from the front.

The housing 100 is divided into a first housing 110 and a second housing 120.

The first housing 110 forms the upper part of the housing 100, and the second housing 120 forms the lower part of the housing 100. The first housing 110 and the second housing 120 may be coupled to each other.

The motor installation part 111 is provided at one side of the first housing 110.

The valve unit 200 is installed beside the motor installation part 111. The valve unit 200 is disposed so as to be vertically aligned. The motor installation part 111 and the driving motor 3, which is installed in the motor installation part 111, are disposed so as to be horizontally aligned.

An installation plate 112, at which a rotary shaft 430, which is connected to the valve unit 200, is installed, is provided beside the motor installation part 111. The installation plate 112 and the motor installation part 111 may be integrally formed.

The valve unit 200 includes an actuating cam 210, which is connected to the rotary shaft 430 such that the actuating cam 210 can be rotated, and a valve member 220, which is connected to the actuating cam 210 such that the valve member 220 moves upward and downward when the actuating cam 210 is rotated.

The valve member 220 includes an upper stem 221, a lower stem 222 connected to the upper stem 221, and a valve plate 223 provided at the lower end of the lower stem 222 to selectively block the exhaust gas introduction port 121a, which is provided in the housing 100.

The upper stem 221 and the lower stem 222 constitute a valve stem.

A roller 224 is provided at one side of the upper part of the upper stem 221. The roller 224 is inserted into a guide groove 221 formed in the actuating cam 210.

When the actuating cam 210 is rotated, therefore, the roller 224 moves along the guide groove 211. That is, the roller 224 moves relative to the guide groove 211.

In response to the movement of the roller 224, the upper stem 221 moves upward and downward. As a result, the lower stem 22 and the valve plate 223 also move upward and downward to selectively open and close the exhaust gas introduction port 121a.

Meanwhile, the valve cover 300, which covers the valve unit 200 in order to prevent the valve unit 200 from being exposed outward, is provided at the first housing 110.

The side surface of the valve cover 300 is mounted to the installation plate 112, and the lower surface of the valve cover 300 is mounted to a bottom 113 of the first housing 110, in order to prevent the actuating cam 210, the upper stem 221, and the upper part of the lower stem 222 from being exposed outward.

Meanwhile, an elastic member 230 is provided between the upper stem 221 and the upper surface of the bottom 113 of the first housing 110. The elastic member 230 may be a coil spring.

The upper end of the elastic member 230 contacts the lower end of the upper stem 221, and the lower end of the elastic member 230 contacts the bottom 113 of the first housing 110.

The elastic member 230 elastically supports the upper stem 221.

In response to the rotation of the actuating cam 210, the upper stem 221 moves downward with the result that the valve plate 223 opens the exhaust gas introduction port 121a. When the downward force applied to the upper stem 221 is released, the upper stem 221 moves upward due to the elastic restoring force of the elastic member 230.

As a result, the valve plate 223 closes the exhaust gas introduction port 121a.

The driving motor and the actuating cam 210 are connected to each other via a power transmission unit 400, which is constituted by a plurality of gears.

The power transmission unit 400 includes a pinion gear 405 provided at a motor shaft 30 of the driving motor 3, a first gear 410 engaged with the pinion gear 405, and a second gear 420 engaged with the first gear 410.

The rotary shaft 430, which is connected with the actuating cam 210, is inserted into and fixed in the second gear 420 at the rotational center thereof.

The first gear 410 is a spur gear having a plurality of gear layers. A first gear layer 411, which has a relatively large diameter, is engaged with the pinion gear 405, and a second gear layer 412, which has a relatively small diameter, is engaged with the second gear 420.

Teeth are formed only in part of the outer circumferential surface of the second gear 420 such that the teeth of the second gear 420 correspond to the rotational track of the actuating cam 210.

The rotary shaft 430 connects the second gear 420 with the actuating cam 210.

An elastic restoration member 440 is provided around the rotary shaft 430.

The elastic restoration member 440 is connected to the second gear 420 and to the first housing 110 therebetween.

One end of the elastic restoration member 440 is connected to the second gear 420, and the other end of the elastic restoration member 440 is connected to the housing 110. Specifically, the elastic restoration member 440 is fitted into a groove provided in the rear surface of the installation plate 112.

When the first and second gears 410 and 420 are rotated by the driving motor 3, the elastic restoration member 440 is twisted, with the result that the elastic restoration member 440 retains an elastic restoring force. When the driving motor 3 malfunctions or the supply of current to the driving motor 3 is interrupted, whereby the driving motor 3 is not rotated, the elastic restoration member 440 returns to the original state thereof due to the elastic restoring force. As a result, the second gear 420 is rotated to the original position thereof.

Consequently, the actuating cam 210 may also be rotated to the original position thereof.

An arc-shaped magnet 420a is disposed in the surface of the second gear, which is one of the elements constituting the power transmission unit 400.

A sensor unit (not shown) for sensing the magnetic field generated by the magnet 420a is provided in the housing 100. The sensor unit may include a hall sensor.

The power transmission unit 400 is operated by the driving motor 3, with the result that the valve unit 200 is operated. The magnet 420a is disposed in the surface of the second gear 420. As the magnet 420a revolves, therefore, the magnetic field generated by the magnet 420a varies. Consequently, it is possible to recognize the extent by which the valve unit 200 is operated based on the variation in the value of the magnetic field.

In the sensor unit, output voltage that matches each value of the magnetic field is set.

Consequently, the magnetic field varies based on the change in the distance by which the valve member 220 is moved, and voltage corresponding thereto is output from the sensor unit.

A controller may sense the output voltage and thus recognize the current open state of the valve member 220.

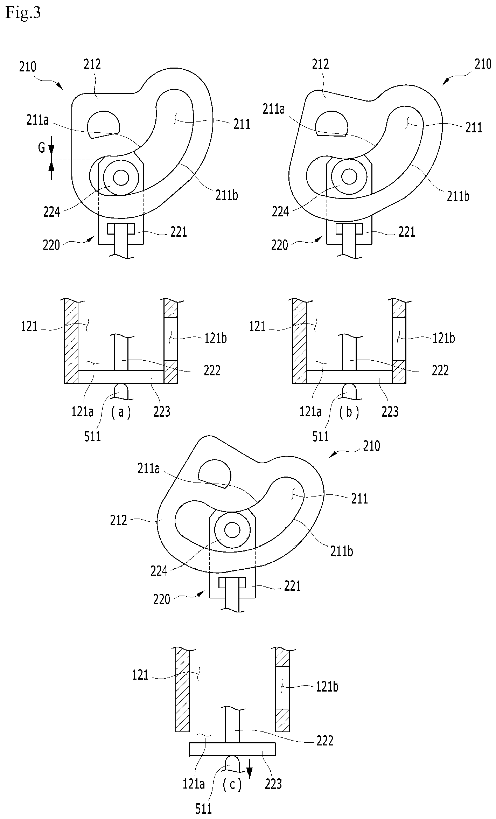

FIGS. 3(a) to 3(c) show the state in which the valve member 220 is open or closed based on the operation of the actuating cam 210.

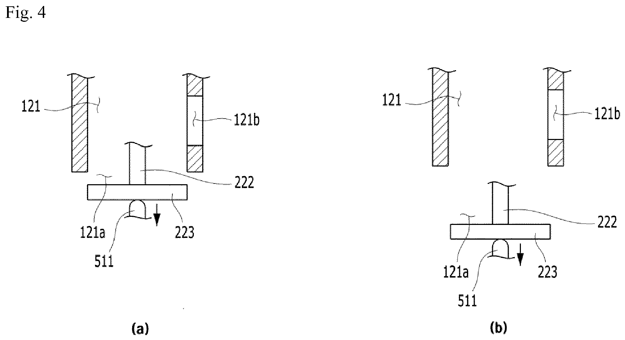

In FIG. 3, a pin 511 of a valve opening extent measurement device 510 (see FIG. 4), for measuring the time at which the valve plate 223 is opened, is located under the valve plate 223.

As shown in FIG. 3(a), when the driving motor 3 (see FIG. 2) is not operated, the actuating cam 210 is not rotated either. Consequently, the valve member 220 does not move downward, with the result that the valve plate 223 keeps the exhaust gas introduction port 121a closed.

As shown in FIG. 3(b), when the driving motor 3 is operated, the actuating cam 210 is rotated.

As shown in FIG. 3(a), however, a gap G is provided between the roller 224 and the upper surface 211a of the guide groove 211. Even when the actuating cam 210 is rotated, therefore, the valve member 220 does not move downward until the guide groove 211 comes into contact with the uppermost end of the roller 224.

That is, even when the driving motor 3 is operated, and the power transmission unit 400 (see FIG. 2), the rotary shaft 430 (see FIG. 2), and the actuating cam 210 are rotated, the valve member 220 does not move downward until the gap G, i.e. a dead zone, which is formed between the upper surface 211a of the guide groove 211 and the uppermost end of the roller 224, is completely eliminated.

Consequently, the valve plate 223 keeps the exhaust gas introduction port 121a closed.

Meanwhile, as shown in FIG. 3(c), when the upper surface 211a of the guide groove 211 comes into contact with the upper end of the roller 224, the actuating cam 210 is further rotated, and when the upper surface 211a of the guide groove 211 pushes the roller 224, the valve member 220 moves downward. Consequently, the valve plate 223 opens the exhaust gas introduction port 121a, with the result that exhaust gas is introduced through the exhaust gas introduction port 121a.

At this time, the pin 511 of the valve opening extent measurement device 510, which is located under the valve plate 223, may sense the distance by which the valve plate 223 is moved.

The valve opening extent measurement device 510 may be connected to a terminal 520 for sensor output information correction, which will be described hereinafter, to inform the terminal 520 of the actual distance by which the valve plate 223 is moved.

FIG. 4(a) shows an early open state of the valve plate 223, and FIG. 4(b) shows a middle or last open state of the valve plate 223.

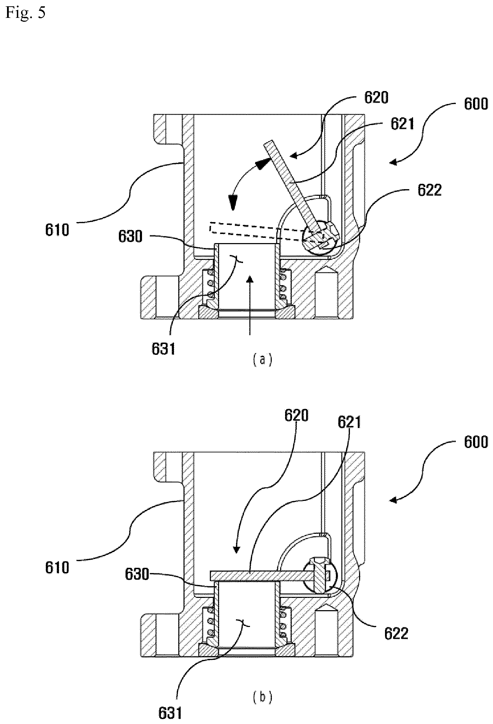

FIG. 5 shows a low-pressure EGR valve 600 according to another embodiment of the present invention. The low-pressure EGR valve 600 includes a housing 610 having a channel defined therein and a valve member 620 turnably disposed in the housing 610.

The valve member 620 includes a valve plate 621 and a rotary shaft 622 connected to the valve plate 621. The rotary shaft 622 rotates.

The rotary shaft 622 is connected to a driving unit (not shown). The driving unit, which includes a driving motor and a gear module, transmits rotational force to the rotary shaft 622.

The gear module may also be referred to as a power transmission unit.

For example, a pinion gear (not shown) may be connected to a motor shaft of the driving motor. The gear module may include a plurality of gears engaged with each other. One of the gears may be connected to the pinion gear, and another of the gears may be connected to the rotary shaft 622.

The open state of the valve plate 621 may be recognized based on the rotational state of the rotary shaft 622. In order to sense the rotational state of the rotary shaft 622, a magnet (not shown) is disposed in the rotary shaft 622 or in the gear that is directly connected to the rotary shaft 622, and a sensor unit, which includes a hall sensor, is disposed in the vicinity of the magnet.

Meanwhile, the valve plate 621 contacts a valve seat 630. An EGR channel 631 may be defined in the valve seat 630 such that exhaust gas is selectively introduced into the EGR channel 631.

As shown in FIG. 5(b), when the valve plate 621 comes into contact with the valve seat 630, with the result that the EGR channel 631 is closed, the introduction of exhaust gas into the EGR channel 631 is interrupted. As shown in FIG. 5(a), when the valve plate 621 is separated from the valve seat 630, with the result that the EGR channel 631 is open, the introduction of exhaust gas into the EGR channel 631 is allowed. The introduced exhaust gas is mixed with fresh air, and the mixture is reintroduced into an engine.

In the case in which the EGR channel is in an early open state in the high-pressure EGR valve, as shown in FIG. 4(a), or in the case in which the EGR channel is in an early open state in the low-pressure EGR valve, as shown by a dotted line in FIG. 5(a), a large amount of exhaust gas may be abruptly introduced through a narrow gap.

For this reason, it is necessary to more precisely control the distance by which the valve member is moved in the early open period than the distance by which the valve member is moved in the middle or late open period.

Particularly, in order to meet more stringent exhaust gas regulations, such as EURO-6, it is necessary to be able to perform control so as to reduce the flow rate of exhaust gas in the early open period.

To this end, it is necessary for the motion of the valve in the early open period and the motion of the valve in the subsequent open period to differ from each other. In addition, it is necessary to set the relationship between the change in the opening extent of the valve and the change in the voltage output from the sensor in the early open period so that it is different from the relationship between the change in the opening extent of the valve and the change in the voltage output from the sensor in the middle or late open period.

That is, the slope (a first slope) of a linear graph showing the relationship between the opening extent of the valve and the output value from the sensor in the early open period and the slope (a second slope) of a linear graph showing the relationship between the opening extent of the valve and the output value from the sensor in the middle or late open period are configured to differ from each other. Specifically, the former (the first slope) and the latter (the second slope) are configured such that the former (the first slope) is not as steep as the latter (the second slope).

As a result, a small change in the opening extent of the valve member appears as a minute change in the output of the sensor in the early open period, based on which the controller may recognize a small change in the opening extent of the valve member, and may minutely adjust the flow rate of exhaust gas that is introduced into the EGR channel.

That is, the controller may minutely control the opening extent of the valve member based on output data including the minute change in the output of the sensor.

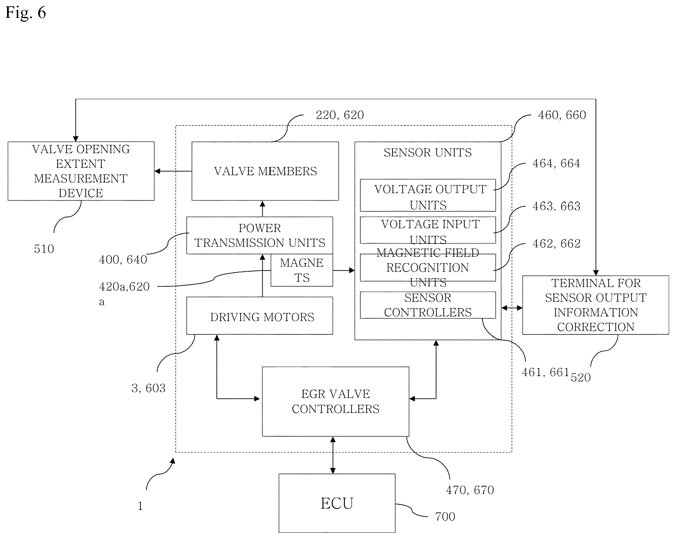

FIG. 6 is a block diagram schematically showing the structure of the EGR valve according to the present invention.

The high-pressure EGR valve and the low-pressure EGR valve according to the present invention include driving motors 3 and 603, each of which constitutes an actuator, power transmission units 400 and 600 connected to the driving motors 3 and 603, respectively, and valve members 220 and 620 for opening and closing introduction ports using power from the power transmission units 400 and 600.

Each of the power transmission units 400 and 600 includes gears and a rotary shaft, as previously described.

For the high-pressure EGR valve, the valve member 220 includes a roller 224, valve stems 221 and 222, to which the roller 224 is rotatably connected, and a valve plate 223. For the low-pressure EGR valve, the valve member 620 includes a valve plate 621 and a rotary shaft 622.

The valve opening extent measurement device 510 does not constitute the EGR valve, but the EGR valve is placed on the valve opening extent measurement device 510.

The valve opening extent measurement device 510 is connected to the valve member of the high-pressure EGR valve or to the valve member of the low-pressure EGR valve in order to measure the opening extent of the valve member.

That is, for the high-pressure EGR valve, the valve opening extent measurement device 510 includes a pin 511, which is configured to contact the lower surface of the valve plate. When the valve plate 223 (see FIGS. 3 and 4) moves downward and opens, therefore, the valve opening extent measurement device 510 measures the distance by which the valve plate 223 moves downward.

On the other hand, for the low-pressure EGR valve, the angle by which the valve plate 621 or the rotary shaft 622, which is connected to the valve plate 621, is rotated may be measured in order to measure the opening extent of the valve member.

Meanwhile, magnets 420a and 620a are mounted in the power transmission units 400 and 600, respectively, and sensor units 460 and 660 for measuring a change in the magnetic field of the magnets 420a and 620a are respectively provided in the housings 100 and 610 of the EGR valves.

Each of the sensor units 460 and 660 may include a hall sensor.

The sensor units 460 and 660 include sensor controllers 461 and 661, magnetic field recognition units 462 and 662 for recognizing the magnetic fields of the magnets 420a and 620a, respectively, voltage input units 463 and 663, to which external voltage is input, and voltage output units 464 and 664 for outputting preset voltage based on the recognized value of the magnetic field.

For example, when a voltage of 5V is input to the voltage input units 463 and 663, the voltage output units 464 and 664 may output preset voltage at the time at which the valve plate starts to open.

Meanwhile, the terminal 520 for sensor output information correction may be connected to the valve opening extent measurement device 510 and to the sensor units 460 and 660 to recognize information about the distance by which the valve plates 223 and 621 of the respective EGR valves 1 and 600 moves and the change in magnetic field when the opening extent (the movement distance or the rotational angle) is changed.

A worker may match the magnetic field, which is changed when the opening extent (the movement distance or the rotational angle) is changed, with output voltage.

As the opening extent of the valve members 220 and 620 is changed, therefore, the output voltage is changed. The output voltage is transmitted to the controllers 470 and 670 and to an electronic control unit (ECU) 700.

Consequently, the controller 470 and 670 and the ECU 700 may recognize the state in which the valve members 220 and 620 are open or closed and the opening extent of the valve members 220 and 620, respectively.

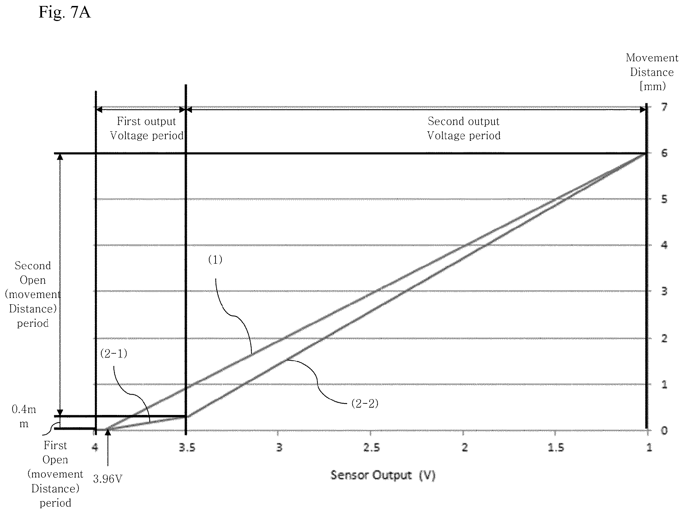

FIG. 7A is a graph showing the relationship between the distance by which a valve unit is moved (or lifted) and the voltage output from a sensor unit in a conventional high-pressure EGR valve and the relationship between the distance by which the valve unit is moved (or lifted) and the voltage output from the sensor unit in the high-pressure EGR valve according to the present invention.

In FIG. 7A, line (1) indicates a relationship graph in the conventional high-pressure EGR valve, and lines (2-1) and (2-2) indicate a relationship graph in the high-pressure EGR valve according to the present invention.

Here, a sensor output range is 1 to 4 V, and a movement distance range is 0 to 6 mm.

For both the conventional high-pressure EGR valve and the high-pressure EGR valve according to the present invention, a voltage of 4 V is theoretically output in the state in which the valve member is closed, i.e. in the case in which the movement distance is 0 mm, whereas a voltage of 1 V is output in the state in which the valve member is maximally open, i.e. in the case in which the movement distance is 6 mm.

As shown in FIG. 3(a), however, the gap G is provided between the roller 224 and the upper surface 211a of the guide groove 211. Even when the actuating cam 210 is rotated, therefore, the valve member 220 does not move downward until the guide groove 211 comes into contact with the uppermost end of the roller 224.

In addition, as shown in FIG. 3(b), when the roller 224 comes into contact with the upper surface 211a of the guide groove 211 with the result that the roller 224 starts to move downward, the valve member 220 actually moves downward to open the EGR channel.

On the assumption that the output voltage when the EGR channel starts to be actually opened is 3.96 V, a range of 4 V to 3.96 V is a kind of dead zone, in which the valve member remains closed.

As the valve member 220 moves downward, the output voltage is reduced.

In the conventional art, a linear graph (1) showing the relationship between the output voltage and the movement distance forms a single slope.

In addition, although not shown, the linear graph (1), which has a single slope, is divided into several periods.

In the case which the linear graph has a single slope, however, a large amount of exhaust gas is introduced in the early open period, with the result that it is difficult to control the exhaust gas.

In the present invention, on the other hand, the open period is divided into a first period and a second period, and a linear graph showing the relationship between the output voltage and the movement distance in the first period and a linear graph showing the relationship between the output voltage and the movement distance in the second period are configured to have different slopes.

Here, the early open period is defined as the first period, and the middle and late open periods are defined as the second period.

The linear graph in the first period is denoted by (2-1), and the linear graph in the second period is denoted by (2-2).

The slope of the linear graph (2-1) in the first period may be gentler than the slope of the linear graph (2-2) in the second period.

In the case in which the movement distance is minutely changed in the first period, therefore, the sensor may sense the minute change in the movement distance in order to indicate most of the sensed change in the movement distance as output voltage.

In the linear graph (1) according to the conventional art, the output voltage from the sensor unit is 3.5 V when the movement distance is 1 mm. In the present invention, on the other hand, an output voltage of 3.5 V means a movement distance of 0.4 mm.

In both the conventional art and the present invention, several points, which are spaced apart from each other, are connected to each other in order to realize the linear graphs. In the conventional art, the open period and the output voltage period are each assumed to be a single consistent period. Several coordinate values (the X axis = a sensor value and the Y axis = a movement distance value), each of which is derived by connecting a specific open point (a specific movement distance value) and a specific output value, are acquired, and the acquired coordinate values are connected to each other in order to acquire a rightward and upward inclined linear graph having a constant slope.

In the present invention, on the other hand, the open period of the valve member is divided into a first period and a second period. In addition, the output voltage period is also divided into a first period and a second period.

For example, it may be assumed that the first open period of the valve member has a lift amount of 0.1 to 0.6 mm and the second open period of the valve member has a lift amount of 0.6 to 6 mm and that the first output voltage period has a voltage of 4 V to 3.5 V and the second output voltage period has a voltage of 3.5 V to 1 V.

Here, the size of the periods may be changed according to circumstances.

In this case, an output value of 3.96 V is matched with an open start lift value (for example, 0.1 mm), at which the valve member actually starts to be opened, and an output value of 3.5 V is matched with the end point of the first period, i.e. 0.4 mm.

A point having coordinates (3.96 V, 0.1 mm) and a point having coordinates (3.5 V, 0.4 mm) are connected with each other in order to acquire a rightward and upward inclined linear graph, from which a related equation is derived. As a result, movement distances and output voltages may be matched with each other in the first period.

Meanwhile, even in the second open period (for example, 0.4 to 6 mm) and the second output voltage period (for example, 3.5 V to 1 V), a linear graph may be acquired in the same manner as described above. As a result, movement distances and output voltages may be matched with each other in the second period.

However, the slope of the linear graph in the first period may be gentler than the slope of the linear graph in the second period.

The slope in the early open period in the conventional art is much steeper than the slope in the early open period in the present invention.

Since variation in the opening extent is greater than variation in the output voltage, therefore, it is not possible for the controller, which senses the opening extent of the valve based on the output voltage from the sensor, to recognize a minute change in the opening extent of the valve and thus to minutely control the opening extent of the valve based thereon.

In the present invention, however, the open period corresponding to the early output voltage period (the first period) is shorter than in the conventional art. As a result, a minute change in output voltage may be matched with a minute change in the opening extent of the valve.

Consequently, it is possible for the controller to recognize a minute change in the opening extent of the valve based on a minute change in output voltage and thus to minutely control the opening extent of the valve based thereon.

Minutely controlling the opening extent of the valve means that it is possible to prevent an abrupt increase in the amount of exhaust gas that is reintroduced when the EGR channel is in an early open state and that it is possible to perform control so that only a small amount of exhaust gas is introduced.

Meanwhile, the end point of the second period in the present invention is identical to the end point in the conventional art, which means the maximum flow rate period.

In the present invention, this means that it is possible to minutely control the amount of exhaust gas in the early open period of the valve and that it is possible to introduce the maximum amount of exhaust gas in the middle and late open periods, as in the conventional art.

Consequently, control may be performed in order to introduce a small amount of exhaust gas in the first period and to introduce a maximum amount of exhaust gas in the second period.

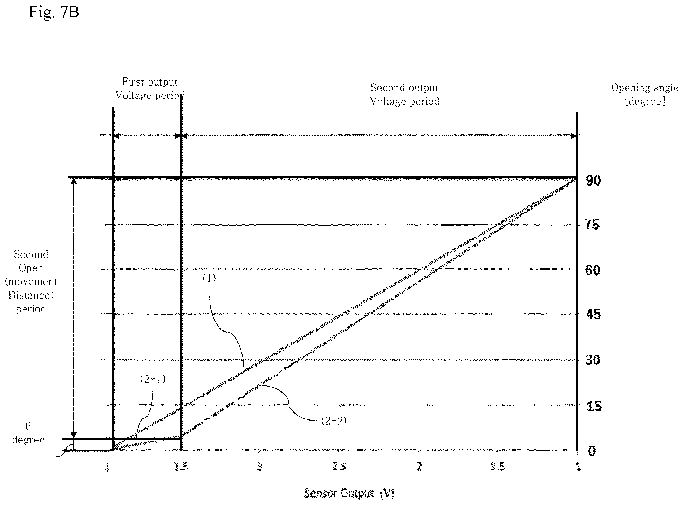

FIG. 7B is a graph showing the relationship between the distance by which a valve unit is moved (or lifted) and the voltage output from a sensor unit in a conventional low-pressure EGR valve and the relationship between the distance by which the valve unit is moved (or lifted) and the voltage output from the sensor unit in the low-pressure EGR valve according to the present invention.

In FIG. 7B, line (1) indicates the relationship graph in the conventional low-pressure EGR valve, and lines (2-1) and (2-2) indicate the relationship graph in the low-pressure EGR valve according to the present invention.

Here, the sensor output range is 1 to 4 V, and the opening angle range is 0 to 90 degrees.

For both the conventional low-pressure EGR valve and the low-pressure EGR valve according to the present invention, a voltage of 4 V is output in the state in which the valve member is closed, i.e. in the case in which the opening angle is 0 degrees, whereas a voltage of 1 V is output in the state in which the valve member is maximally open, i.e. in the case in which the opening angle is 90 degrees.

As the valve member is turned by the rotation of the rotary shaft 622 in the state in which the valve member is closed, with the result that the EGR channel 631 starts to be opened, the output voltage is reduced.

In the low-pressure EGR valve according to the conventional art, a linear graph (1) showing the relationship between the output voltage and the opening angle forms a single slope, in the same manner as in the high-pressure EGR valve.

In addition, although not shown, the linear graph (1), which has a single slope, is divided into several periods.

In the case which the linear graph has a single slope, however, a large amount of exhaust gas is introduced in the early open period, with the result that it is difficult to control the exhaust gas.

In the present invention, on the other hand, the open period is divided into a first period and a second period, and a linear graph showing the relationship between the output voltage and the opening angle in the first period and a linear graph showing the relationship between the output voltage and the opening angle in the second period are configured to have different slopes.

Here, the early open period is defined as the first period, and the middle and late open periods are defined as the second period.

The linear graph in the first period is denoted by (2-1), and the linear graph in the second period is denoted by (2-2).

The slope of the linear graph (2-1) in the first period may be gentler than the slope of the linear graph (2-2) in the second period.

In the case in which the movement distance is minutely changed in the first period, therefore, the sensor may sense the minute change in the movement distance in order to indicate most of the sensed change in the movement distance as output voltage.

In the linear graph (1) according to the conventional art, the voltage output from the sensor unit is 3.5 V when the opening angle is 15 degrees. In the present invention, on the other hand, an output voltage of 3.5 V indicates an opening angle of 6 degrees.

In both the conventional art and the present invention, several points, which are spaced apart from each other, are connected to each other in order to realize the linear graphs.

In the conventional art, the open period and the output voltage period are each assumed to be a single consistent period. Several coordinate values (the X axis = a sensor value and the Y axis = a movement distance value), each of which is derived by connecting a specific open point (a specific movement distance value) and a specific output value, are acquired, and the acquired coordinates values are connected to each other in order to acquire a rightward and upward inclined linear graph having a constant slope.

In the present invention, on the other hand, the open period of the valve member is divided into a first period and a second period. In addition, the output voltage period is also divided into a first period and a second period.

For example, it may be assumed that the first open period of the valve member has an opening angle of 0.1 to 6 degrees and the second open period of the valve member has an opening angle of 6 to 90 degrees and that the first output voltage period has a voltage of 4 V to 3.5 V and the second output voltage period has a voltage of 3.5 V to 1 V.

Here, the size of the periods may be changed according to circumstances.

In this case, an output value of 3.99 V is matched with an open start angle (for example, 0.1 degrees), at which the valve member actually starts to be opened, and an output value of 3.5 V is matched with the end point of the first period, i.e. 6 degrees.

A point having coordinates (3.99 V, 0.1 degrees) and a point having coordinates (3.5 V, 6 degrees) are connected with each other in order to acquire a rightward and upward inclined linear graph, from which a related equation is derived. As a result, opening angles and output voltages may be matched with each other in the first period.

Meanwhile, even in the second open period (for example, 6 to 90 degrees) and the second output voltage period (for example, 3.5 V to 1 V), a linear graph may be acquired in the same manner as described above. As a result, opening angles and output voltages may be matched with each other in the second period.

However, the slope of the linear graph in the first period may be gentler that the slope of the linear graph in the second period.

The slope in the early open period in the conventional art is much steeper than the slope in the early open period in the present invention.

Since variation in the open angle is greater than variation in the output voltage, therefore, it is not possible for the controller, which senses the opening extent (or opening angle) of the valve based on the output voltage from the sensor, to recognize the minute change in the opening extent (or opening angle) of the valve and thus to minutely control the opening extent (or opening angle) of the valve based thereon.

In the present invention, however, the open period corresponding to the early output voltage period (the first period) is shorter than in the conventional art. As a result, a minute change in output voltage may be matched with a minute change in the opening extent (or opening angle) of the valve.

Consequently, it is possible for the controller to recognize a minute change in the opening extent (or opening angle) of the valve based on a minute change in output voltage and thus to minutely control the opening extent (or opening angle) of the valve based thereon.

Minutely controlling the opening extent (or opening angle) of the valve means that it is possible to prevent an abrupt increase in the amount of exhaust gas that is reintroduced when the EGR channel is in an early open state and that it is possible to guide the reintroduction of a small amount of exhaust gas.

Meanwhile, the end point of the second period in the present invention is identical to the end point in the conventional art, which means the maximum flow rate period.

In the present invention, this means that it is possible to minutely control the amount of exhaust gas in the early open period of the valve and that it is possible to introduce the maximum amount of exhaust gas in the middle and late open periods, as in the conventional art.

Consequently, control may be performed in order to introduce a small amount of exhaust gas in the first period and to introduce the maximum amount of exhaust gas in the second period.

In the high-pressure EGR valve or the low-pressure EGR valve according to the present invention, the movement distance of the valve member in the first period may be 5 to 10 % of the total movement distance, and the output voltage in the first period may be 10 to 20 % of the total output voltage period.

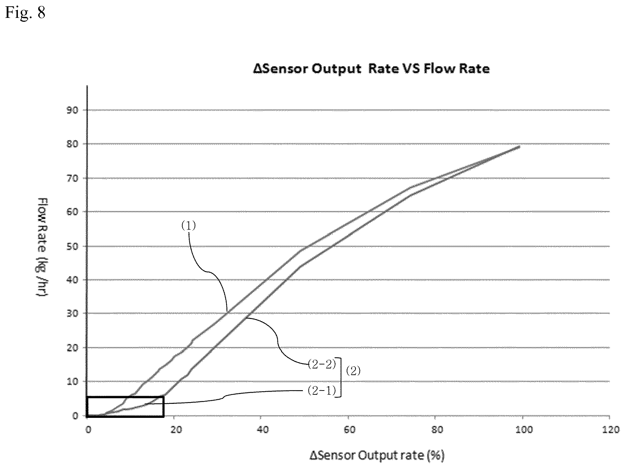

FIG. 8 is a graph showing the relationship between the change in voltage output from the sensor and the flow rate of exhaust gas that is introduced through recirculation in the present invention and the relationship between the change in voltage output from the sensor and the flow rate of exhaust gas that is introduced through recirculation in the conventional art.

The X axis indicates percentage in variation such that 4 V corresponds to 0 % and 1 V corresponds to 100 %, and the Y axis indicates the amount of exhaust gas that is introduced into the EGR channel in kg/h.

In FIG. 8, line (1) indicates a relationship graph between the change in output voltage from the sensor and the amount of exhaust gas that is introduced through recirculation in the conventional art, and line (2) indicates a relationship graph between the change in output voltage from the sensor and the amount of exhaust gas that is introduced through recirculation in the present invention.

In addition, line (2-1) indicates a relationship graph between the change in output voltage from the sensor and the amount of exhaust gas that is introduced through recirculation in the first period, shown in FIG. 7A, and line (2-2) indicates a relationship graph between the change in output voltage from the sensor and the amount of exhaust gas that is introduced through recirculation in the second period, shown in FIG. 7A.

The technical meaning of these graphs is effective for both the high-pressure EGR valve and the low-pressure EGR valve.

The graph (2-1) is shown in a box in order to make it easy to recognize the graph (2-1).

The change in output voltage means the change in the movement distance (or opening angle) of the valve member.

In the conventional art, the amount of exhaust gas that is introduced is abruptly increased in the early open period of the valve member, since the variation in movement distance (or opening angle) of the valve member is great in the early open period of the valve member.

In the present invention, however, the variation in the movement distance (or opening angle) of the valve member in the early open period of the valve member is much smaller than the variation in the movement distance (or opening angle) of the valve member in the early open period of the valve member in the conventional art. This means that it is possible to minutely adjust the valve member.

In the present invention, therefore, the amount of exhaust gas that is introduced may be increased more slowly in the early period than in the conventional art. Consequently, it is possible to minutely increase or decrease the amount of exhaust gas that is introduced.

As is apparent from the above description, according to the present invention, it is possible to control the opening extent of the valve member as minutely as possible in the early open period of the valve member and thus to match the opening extent of the valve member with the output value from the sensor.

Particularly, in the conventional art, the output value, which indicates the early open period of the EGR channel, is roughly set, with the result that it is not possible to provide data with which the early open period can be precisely controlled. In the present invention, however, it is possible to set a plurality of sensor output values capable of indicating minute motion of the valve member in the early open period, whereby it is possible to provide data with which the valve member can be precisely controlled.

Consequently, it is possible for the controller of the EGR valve and the ECU to prevent an abrupt increase in the amount of exhaust gas that is reintroduced into the engine in the early open period of the valve and to minutely control the amount of exhaust gas that is reintroduced.

## Claims

1. An exhaust gas recirculation (EGR) valve (1) for vehicles comprising:
a valve member (220) for opening and closing an EGR channel (121);
a sensor unit for sensing an opening extent of the valve member (220) and outputting an output voltage value corresponding to the opening extent of the valve member (220); and
a controller connected to the sensor unit for recognizing the opening extent of the valve member based on the value output from the sensor unit to control the valve member, wherein
a change in the opening extent of the valve member (220) and a change in the value output from the sensor unit are linear, and
**characterized by** a linear graph defining a relationship between the opening extent of the valve member (220) and the output value from the sensor unit in a first period, which is an early open period after the valve member (220) opens the EGR channel (121), and a linear graph defining a relationship between the opening extent of the valve member (220) and the output value from the sensor unit in a second period, in which the valve member (220) is maximally open after the first period, are realized so as to have different slopes,
wherein the slope of the linear graph in the first period is gentler than the slope of the linear graph in the second period,
wherein the first period is realized by:
a first open period comprising at least two different opening extent values; and
a first output voltage period comprising a plurality of output values from the sensor unit, matched with the opening extent values in the first open period.
wherein the second period is realized by:
a second open period comprising at least two different opening extent values; and
a second output voltage period comprising a plurality of output values from the sensor unit, matched with the opening extent values in the second open period,
wherein the controller changes minutely the opening extent in the first period rather than the second period,
wherein the sensor indicates the minute change in the opening extent as output value ,
wherein a minute change in output value is matched with a minute change in the opening extent of the valve (1),
wherein the controller recognizes the minute change in the opening extent of the valve (1) based on the minute change in output value, and minutely controls the opening extent of the valve (1) based on the minute change in output value.

2. The EGR valve (1) according to claim 1, wherein
the first open period is 5 to 10 % of a total movement distance, and
the first output voltage period is 10 to 20 % of a total output voltage period.

3. The EGR valve (1) according to claim 1, wherein the first period comprises a plurality of points spaced apart from each other and linearly connected to each other, the points being formed by matching a plurality of different opening extent values with a plurality of different output values corresponding thereto.

4. The EGR valve (1) according to claim 1,
the valve member (220) comprises a valve plate (223) for opening and closing an EGR channel (121);
a valve stem (221, 222) connected to the valve plate (223), the valve stem (221, 222) being configured to move upward and downward;
the sensor unit measures a distance by which the valve stem (221, 222) moves; and
the controller is connected to the sensor unit for recognizing a movement distance of the valve member (220) based on a value output from the sensor unit to control the valve member (220), wherein
a change in the movement distance of the valve stem (221, 222) and a change in the value output from the sensor unit are linear, and
a linear graph defining a relationship between the movement distance of the valve stem (221, 222) and the output value from the sensor unit in a first period, which is an early open period after the valve plate (223) opens the EGR channel (121), and a linear graph defining a relationship between the movement distance of the valve stem (221, 222) and the output value from the sensor unit in a second period, in which the valve member (220) is maximally open after the first period, are realized so as to have different slopes.

5. The EGR valve (1) according to claim 4, wherein the slope of the linear graph in the first period is gentler than the slope of the linear graph in the second period.

6. The EGR valve (1) according to claim 4 or 5, wherein the first period is realized by:
a first movement distance period comprising a plurality of different movement distance values; and
a first output voltage period comprising a plurality of output values from the sensor unit, matched with the movement distance values of the valve stem (221, 222) in the first movement distance period.

7. The EGR valve (1) according to claim 6, wherein
the first movement distance period is 5 to 10 % a total movement distance, and
the first output voltage period is 10 to 20 % a total output voltage period.

8. The EGR valve 81) according to claim 4, 5, or 7, wherein the first period comprises a plurality of points spaced apart from each other and linearly connected to each other, the points being formed by matching a plurality of different movement distance values with a plurality of different output values corresponding thereto.

9. The EGR valve (1) according to claim 1,:
the valve member (220) comprises a valve plate (223) for opening and closing an EGR channel (121) and a rotary shaft (430);
the sensor unit measures an opening angle of the valve member (220); and
the controller is connected to the sensor unit for recognizing the opening angle of the valve member (220) based on an output value from the sensor unit to control the valve member (220), wherein
a change in the opening angle of the valve member (220) and a change in the value output from the sensor unit are linear, and
a linear graph defining a relationship between the opening angle of the valve member (220) and the output value from the sensor unit in a first period, which is an early open period after the valve member (220) opens the EGR channel (121), and a linear graph defining a relationship between the opening angle of the valve member (220) and the output value from the sensor unit in a second period, in which the valve member (220) is maximally open after the first period, are realized so as to have different slopes.

10. The EGR valve (1) according to claim 9, wherein the slope of the linear graph in the first period is gentler than the slope of the linear graph in the second period.

11. The EGR valve (1) according to claim 9 or 10, wherein the first period is realized by:
a first opening angle period comprising a plurality of different opening angle values; and
a first output voltage period comprising a plurality of output values from the sensor unit, matched with the opening angle values in the first opening angle period.

12. The EGR valve (1) according to claim 11, wherein
the first opening angle period is 5 to 10 % of a total movement distance, and
the first output voltage period is 10 to 20 % of a total output voltage period.

13. The EGR valve (1) according to claim 9, 10, or 12, wherein the first period comprises a plurality of points spaced apart from each other and linearly connected to each other, the points being formed by matching a plurality of different opening angle values with a plurality of different output voltage values corresponding thereto.

## Patentansprüche

1. Abgasrückführungs(EGR)-Ventil (1) für Fahrzeuge umfassend:
ein Ventilelement (220) zum Öffnen und Schließen eines EGR-Kanals (121);
eine Sensoreinheit zum Erfassen eines Öffnungsgrads des Ventilelements (220) und zum Ausgeben eines dem Öffnungsgrad des Ventilelements (220) entsprechenden Ausgangsspannungswerts; und
eine Steuereinrichtung, die mit der Sensoreinheit verbunden ist, zum Erkennen des Öffnungsgrads des Ventilelements basierend auf der Wertausgabe von der Sensoreinheit, um das Ventilelement zu steuern, wobei
eine Änderung des Öffnungsgrads des Ventilelements (220) und eine Änderung der Wertausgabe von der Sensoreinheit linear sind, und
**dadurch gekennzeichnet, dass** ein linearer Graph, der eine Beziehung zwischen dem Öffnungsgrad des Ventilelements (220) und dem Ausgangswert von der Sensoreinheit in einer ersten Periode definiert, die eine frühe Öffnungsperiode ist, nachdem das Ventilelement (220) den EGR-Kanal (121) geöffnet hat, und ein linearer Graph, der eine Beziehung zwischen dem Öffnungsgrad des Ventilelements (220) und dem Ausgangswert von der Sensoreinheit in einer zweiten Periode definiert, in der das Ventilelement (220) nach der ersten Periode maximal offen ist, so verwirklicht sind, dass sie unterschiedliche Neigungen aufweisen,
wobei die Neigung des linearen Graphen in der ersten Periode sanfter als die Neigung des linearen Graphen in der zweiten Periode ist,
wobei die erste Periode verwirklicht ist durch:
eine erste Öffnungsperiode, die wenigstens zwei unterschiedliche Öffnungsgradwerte umfasst; und
eine erste Ausgangsspannungsperiode, die eine Vielzahl von Ausgangswerten von der Sensoreinheit umfasst, die mit den Öffnungsgradwerten in der ersten Öffnungsperiode abgeglichen sind,
wobei die zweite Periode verwirklicht ist durch:
eine zweite Öffnungsperiode, die wenigstens zwei unterschiedliche Öffnungsgradwerte umfasst; und
eine zweite Ausgangsspannungsperiode, die eine Vielzahl von Ausgangswerten von der Sensoreinheit umfasst, die mit den Öffnungsgradwerten in der zweiten Öffnungsperiode abgeglichen sind,
wobei die Steuereinrichtung den Öffnungsgrad eher in der ersten Periode als der zweiten Periode geringfügig ändert,
wobei der Sensor die geringfügige Änderung des Öffnungsgrads als Ausgangswert anzeigt,
wobei eine geringfügige Änderung des Ausgangswerts mit einer geringfügigen Änderung des Öffnungsgrads des Ventils (1) abgeglichen ist,
wobei die Steuereinrichtung die geringfügige Änderung des Öffnungsgrads des Ventils (1) basierend auf der geringfügigen Änderung des Ausgangswerts erkennt, und den Öffnungsgrad des Ventils (1) basierend auf der geringfügigen Änderung des Ausgangswerts geringfügig steuert.

2. EGR-Ventil (1) nach Anspruch 1, wobei
die erste Öffnungsperiode 5 bis 10 % eines Gesamtbewegungsabstands beträgt, und
die erste Ausgangsspannungsperiode 10 bis 20 % einer Gesamtausgangsspannungsperiode beträgt.

3. EGR-Ventil (1) nach Anspruch 1, wobei die erste Periode eine Vielzahl von Punkten umfasst, die voneinander beabstandet und linear miteinander verbunden sind, wobei die Punkte durch Abgleichen einer Vielzahl von unterschiedlichen Öffnungsgradwerten mit einer Vielzahl von diesen entsprechenden unterschiedlichen Ausgangswerten gebildet sind.

4. EGR-Ventil (1) nach Anspruch 1,
wobei das Ventilelement (220) eine Ventilplatte (223) zum Öffnen und Schließen eines EGR-Kanals (121); und
einen mit der Ventilplatte (223) verbundenen Ventilschaft (221, 222) umfasst, wobei der Ventilschaft (221, 222) dafür konfiguriert ist, sich nach oben und nach unten zu bewegen;
die Sensoreinheit einen Abstand misst, um den sich der Ventilschaft (221, 222) bewegt; und
die Steuereinrichtung mit der Sensoreinheit zum Erkennen eines Bewegungsabstands des Ventilelements (220) basierend auf der Wertausgabe von der Sensoreinheit verbunden ist, um das Ventilelement (220) zu steuern, wobei
eine Änderung des Bewegungsabstands des Ventilschafts (221, 222) und eine Änderung der Wertausgabe von der Sensoreinheit linear sind, und
ein linearer Graph, der eine Beziehung zwischen dem Bewegungsabstand des Ventilschafts (221, 222) und dem Ausgangswert von der Sensoreinheit in einer ersten Periode definiert, die eine frühe Öffnungsperiode ist, nachdem die Ventilplatte (223) den EGR-Kanal (121) geöffnet hat, und ein linearer Graph, der eine Beziehung zwischen dem Bewegungsabstand des Ventilschafts (221, 222) und dem Ausgangswert von der Sensoreinheit in einer zweiten Periode definiert, in der das Ventilelement (220) nach der ersten Periode maximal offen ist, so verwirklicht sind, dass sie unterschiedliche Neigungen aufweisen.

5. EGR-Ventil (1) nach Anspruch 4, wobei die Neigung des linearen Graphen in der ersten Periode sanfter als die Neigung des linearen Graphen in der zweiten Periode ist.

6. EGR-Ventil (1) nach Anspruch 4 oder 5, wobei die erste Periode verwirklicht ist durch:
eine erste Bewegungsabstandsperiode, die eine Vielzahl von unterschiedlichen Bewegungsabstandswerten umfasst; und
eine erste Ausgangsspannungsperiode, die eine Vielzahl von Ausgangswerten von der Sensoreinheit umfasst, die mit den Bewegungsabstandswerten des Ventilschafts (221, 222) in der ersten Bewegungsabstandsperiode abgeglichen sind.

7. EGR-Ventil (1) nach Anspruch 6, wobei
die erste Bewegungsabstandsperiode 5 bis 10 % eines Gesamtbewegungsabstands beträgt, und
die erste Ausgangsspannungsperiode 10 bis 20 % einer Gesamtausgangsspannungsperiode beträgt.

8. EGR-Ventil (1) nach Anspruch 4, 5 oder 7, wobei die erste Periode eine Vielzahl von Punkten umfasst, die voneinander beabstandet und linear miteinander verbunden sind, wobei die Punkte durch Abgleichen einer Vielzahl von unterschiedlichen Bewegungsabstandswerten mit einer Vielzahl von diesen entsprechenden unterschiedlichen Ausgangswerten gebildet sind.

9. EGR-Ventil (1) nach Anspruch 1, wobei
das Ventilelement (220) eine Ventilplatte (223) zum Öffnen und Schließen eines EGR-Kanals (121) und eine rotierende Welle (430) umfasst;
die Sensoreinheit einen Öffnungswinkel des Ventilelements (220) misst; und
die Steuereinrichtung mit der Sensoreinheit zum Erkennen des Öffnungswinkels des Ventilelements (220) basierend auf einem Ausgangswert von der Sensoreinheit verbunden ist, um das Ventilelement (220) zu steuern, wobei
eine Änderung des Öffnungswinkels des Ventilelements (220) und eine Änderung der Wertausgabe von der Sensoreinheit linear sind, und
ein linearer Graph, der eine Beziehung zwischen dem Öffnungswinkel des Ventilelements (220) und dem Ausgangswert von der Sensoreinheit in einer ersten Periode definiert, die eine frühe Öffnungsperiode ist, nachdem das Ventilelement (220) den EGR-Kanal (121) geöffnet hat, und ein linearer Graph, der eine Beziehung zwischen dem Öffnungswinkel des Ventilelements (220) und dem Ausgangswert von der Sensoreinheit in einer zweiten Periode definiert, in der das Ventilelement (220) nach der ersten Periode maximal offen ist, so verwirklicht sind, dass sie unterschiedliche Neigungen aufweisen.

10. EGR-Ventil (1) nach Anspruch 9, wobei die Neigung des linearen Graphen in der ersten Periode sanfter als die Neigung des linearen Graphen in der zweiten Periode ist.

11. EGR-Ventil (1) nach Anspruch 9 oder 10, wobei die erste Periode verwirklicht ist durch:
eine erste Öffnungswinkelperiode, die eine Vielzahl von unterschiedlichen Öffnungswinkelwerten umfasst; und
eine erste Ausgangsspannungsperiode, die eine Vielzahl von Ausgangswerten von der Sensoreinheit umfasst, die mit den Öffnungswinkelwerten in der ersten Öffnungswinkelperiode abgeglichen sind.

12. EGR-Ventil (1) nach Anspruch 11, wobei
die erste Öffnungswinkelperiode 5 bis 10 % eines Gesamtbewegungsabstands beträgt, und
die erste Ausgangsspannungsperiode 10 bis 20 % einer Gesamtausgangsspannungsperiode beträgt.

13. EGR-Ventil (1) nach Anspruch 9, 10 oder 12, wobei die erste Periode eine Vielzahl von Punkten umfasst, die voneinander beabstandet und linear miteinander verbunden sind, wobei die Punkte durch Abgleichen einer Vielzahl von unterschiedlichen Öffnungswinkelwerten mit einer Vielzahl von diesen entsprechenden unterschiedlichen Ausgangsspannungswerten gebildet sind.

## Revendications

1. Valve (1) de remise en circulation des gaz d'échappement (EGR) pour véhicule comprenant :
- un élément de valve (220) pour l'ouverture et la fermeture d'un canal EGR (121),
- une unité de détection pour détecter le degré d'ouverture de l'élément de valve (220) et émettre une valeur de tension de sortie correspondant au degré d'ouverture de l'élément de valve (220), et
- un contrôleur connecté à l'unité de détection pour reconnaître le degré d'ouverture de l'élément de valve sur la base de la valeur de sortie provenant de l'unité de détection pour contrôler l'élément de valve, dans lequel
- un changement dans le degré d'ouverture de l'élément de valve (220) et un changement dans la valeur de sortie provenant de l'unité de détection sont linéaires, et
- **caractérisée en ce qu'**un graphique linéaire définissant une relation entre le degré d'ouverture de l'élément de valve (220) et la valeur de sortie provenant de l'unité de détection dans une première période, qui est une période d'ouverture précoce après que l'élément de valve (220) ait ouvert le canal EGR (121), et un graphique linéaire définissant une relation entre le degré d'ouverture de l'élément de valve (220) et la valeur de sortie provenant de l'unité de détection dans une deuxième période, dans laquelle l'élément de valve (220) est ouvert au maximum après la première période sont réalisés de manière à présenter des pentes différentes,
- où la pente du graphique linéaire de la première période est plus douce que la pente du graphique linéaire de la deuxième période,
- où la première période est réalisée par :
- une première période d'ouverture comprenant au moins deux valeurs différentes de degré d'ouverture, et
- une première période de tension de sortie comprenant une pluralité de valeurs de sortie provenant de l'unité de détection, associées avec les valeurs de degré d'ouverture dans la première période d'ouverture,
- où la deuxième période est réalisée par :
- une deuxième période d'ouverture comprenant au moins deux valeurs différentes de degré d'ouverture, et
- une deuxième période de tension de sortie comprenant une pluralité de valeurs de sortie provenant de l'unité de détection, associées avec les valeurs de degré d'ouverture de la deuxième période d'ouverture,
- où le contrôleur change minutieusement le degré d'ouverture pendant la première période plutôt que pendant la deuxième période,
- où le détecteur indique le changement infime dans le degré d'ouverture comme une valeur de sortie,
- où un changement infime dans la valeur de sortie est associé à un changement infime dans le degré d'ouverture de la valve (1),
- où le contrôleur reconnaît le changement infime dans le degré d'ouverture de la valve (1) sur la base du changement infime dans la valeur de sortie et contrôle minutieusement le degré d'ouverture de la valve (1) sur la base du changement infime dans la valeur de sortie.

2. Valve EGR (1) selon la revendication 1, **caractérisée en ce que**
la première période d'ouverture représente de 5 à 10% d'une distance totale de mouvement, et
la première période de tension de sortie représente de 10 à 20% d'une période totale de tension de sortie.

3. Valve EGR (1) selon la revendication 1, **caractérisée en ce que** la première période comprend une pluralité de points séparés les uns des autres et connectés linéairement les uns aux autres, les points étant formés en associant une pluralité de différentes valeurs de degrés d'ouverture avec une pluralité de différentes valeurs de sortie leur correspondant.

4. Valve EGR (1) selon la revendication 1,
l'élément de valve (220) comprend un plateau de distribution (223) pour ouvrir et fermer le canal EGR (121),
une tige de soupape (221, 222) connectée au plateau de distribution (223), la tige de soupape (221, 222) étant configurée pour se déplacer vers le haut et vers le bas,
l'unité de détection mesure une distance de déplacement de la tige de soupape (221, 222) se déplace, et
le contrôleur est connecté à l'unité de détection pour reconnaître une distance de mouvement de l'élément de valve (220) sur la base d'une émission de valeur provenant de l'unité de détection afin de contrôler l'élément de valve (220), dans lequel
un changement dans la distance de mouvement de la tige de soupape (221, 222) et un changement dans la sortie de valeur provenant de l'unité de détection sont linéaires, et
un graphique linéaire définissant une relation entre la distance de mouvement de la tige de soupape (221, 222) et la valeur de sortie provenant de l'unité de détection pendant une première période, qui est une période d'ouverture précoce après que le plateau de distribution (223) ait ouvert le canal EGR (121), et un graphique linéaire définissant une relation entre la distance de mouvement de la tige de soupape (221, 222) et la valeur de sortie provenant de l'unité de détection dans une deuxième période, au cours de laquelle l'élément de valve (220) est ouvert au maximum après la première période, sont réalisés de manière à avoir des pentes différentes.

5. Valve EGR (1) selon la revendication 4, **caractérisée en ce que** la pente du graphique linéaire de la première période est plus douce que la pente du graphique linéaire de la deuxième période.

6. Valve EGR (1) selon la revendication 4 ou 5, **caractérisée en ce que** la première période est réalisée par :
une première période de distance de mouvement comprenant une pluralité de différentes valeurs de distance de mouvement, et
une première période de tension de sortie comprenant une pluralité de valeurs de sortie provenant de l'unité de détection, associées avec les valeurs de distance de mouvement de la tige de soupape (221, 222) pendant la première période de distance de mouvement.

7. Valve EGR (1) selon la revendication 6, **caractérisée en ce que**
la première période de distance de mouvement représente entre 5 et 10% d'une distance totale de mouvement, et
la première période de tension de sortie représente 10 à 20% d'une période totale de tension de sortie.

8. Valve EGR (1) selon la revendication 4, 5 ou 7, **caractérisée en ce que** la première période comprend une pluralité de points séparés les uns des autres et connectés linéairement les uns aux autres, les points étant formés en associant une pluralité de différentes valeurs de distance de mouvement à une pluralité de différentes valeurs de sorties leur correspondant.

9. Valve EGR (1) selon la revendication 1 :
l'élément de valve (220) comprend un plateau de distribution (223) pour ouvrir et fermer un canal EGR (121) et un axe rotatif (430),
l'unité de détection mesure un angle d'ouverture de l'élément de valve (220), et
le contrôleur est connecté à l'unité de détection pour reconnaître l'angle d'ouverture de l'élément de valve (220) sur la base d'une valeur de sortie provenant de l'unité de détection pour contrôler l'élément de valve (220), où
un changement dans l'angle d'ouverture de l'élément de valve (220) et un changement dans la sortie de valeur provenant de l'unité de détection sont linéaires, et
un graphique linéaire définissant une relation entre l'angle d'ouverture de l'élément de valve (220) et la valeur de sortie provenant de l'unité de détection pendant une première période, qui est une période d'ouverture précoce après que l'élément de valve (220) ait ouvert le canal EGR (121) et un graphique linéaire définissant une relation entre l'angle d'ouverture de l'élément de valve (220) et la valeur de sortie provenant de l'unité de détection dans une deuxième période, dans laquelle l'élément de valve (220) est ouvert au maximum après la première période, sont réalisés de manière à présenter des pentes différentes.

10. Valve EGR (1) selon la revendication 9, **caractérisée en ce que** la pente du graphique linéaire de la première période est plus douce que la pente du graphique linéaire de la deuxième période.

11. Valve EGR (1) selon la revendication 9 ou 10, **caractérisée en ce que** la première période est réalisée en :
une première période d'angle d'ouverture comprenant une pluralité de différentes valeurs d'angles d'ouverture, et
une première période de tension de sortie comprenant une pluralité de valeurs de sortie provenant de l'unité de détection, associées aux valeurs d'angles d'ouvertures dans la première période d'angle d'ouverture.

12. Valve EGR (1) selon la revendication 11, **caractérisée en ce que** :
la première période d'angle d'ouverture représente entre 5 et 10% d'une étendue totale de mouvement, et
la première période de tension de sortie représente entre 10 et 20% d'une période totale de tension de sortie.

13. Valve EGR (1) selon la revendication 9, 10 ou 12, **caractérisée en ce que** la première période comprend une pluralité de points séparés les uns des autres et connectés linéairement les uns aux autres, les points étant formés en associant une pluralité de différentes valeurs d'angles d'ouverture avec une pluralité de différentes valeurs de tension de sortie leur correspondant.
